# EUROPEAN PATENT APPLICATION

(11) **EP 4 268 685 A1**
(43) Date of publication of application: **01.11.2023**
(21) Application number: 22212383.8
(22) Date of filing: 09.12.2022
(51) Int. Cl.: A47J 27/21, A47J 36/38

(54) **A LIQUID HEATING CONTAINER**

(30) Priority: 24.04.2022 CN 202221041323 U
(71) Applicant: Zhejiang Shaoxing Supor Domestic Electrical Appliance Co., Ltd., Shaoxing, Zhejiang 312017 (CN)
(72) Inventor: MEI, Chenmin, Shaoxing (CN)
(74) Representative: LLR

(57) **Abstract**

The present application provides a liquid heating container comprising a container body, a lid assembly, and a pressure releasing passage control assembly which comprises a passage shell inside which two venting passages are formed and mobile sealing members arranged respectively inside each venting passage, each venting passage comprising a steam inlet arranged at a bottom wall of the venting passage and putting the venting passage in communication with an inner chamber of the container body, and a steam outlet arranged at a top wall of the venting passage and putting the venting passage in communication with a steam pressure releasing chamber, the steam outlet and the steam inlet being in communication with each other and located at a same end in a direction of extension of the venting passage and relatively close to each other. In the liquid heating container according to the present application, steam has a relatively short flow path in the venting passages of the pressure releasing passage control assembly and does not easily condense therein to form condensed water, so as to solve drinking water hygiene issues caused by steam condensing inside an excessively long passage.

## Description

### Technical field

The present application relates to the technical field of home electrical appliances, in particular to a liquid heating container.

### Background

An anti-toppling liquid heating container will produce a large amount of steam when heating liquid, causing the pressure inside a kettle body to increase abruptly. When in use, a certain steam outlet needs to be provided to release the pressure inside the kettle. When it topples over, it not only needs to prevent liquid from spilling out in large amounts, but also needs to discharge steam timely to prevent the danger of explosions.

Therefore, to prevent the above-described danger, the application with Publication No. CN112823723A discloses an exhaust line 3. As shown in Fig. 1, the exhaust line 3 comprises an inlet pipe 31, a connecting pipe 32, a sealing pipe 33, and an exhaust pipe 34, wherein one end of the connecting pipe 32 is connected to and in communication with the inlet pipe 31, the sealing pipe 33 comprises a first sealing pipe section 331 and a second sealing pipe section 332 connected to and in communication with each other, the other end of the connecting pipe 32 is connected to and in communication with the first sealing pipe section 331, and the other end of the second sealing pipe section 332 is connected to and in communication with the exhaust pipe 34, and wherein a toppling sealing member is provided at the second sealing pipe section 332 and is capable of moving in the second sealing pipe section 332 under the effect of gravity to change the state of blocking the exhaust pipe 34. When the container is used for heating, steam can be discharged via the exhaust line 3. When the container topples over, the toppling sealing member is capable of closing the exhaust line 3 of which an inlet end 311 is located below the level of liquid in the kettle body so as to prevent liquid in the kettle from spilling out, and opening the exhaust line 3 of which an inlet end 311 is located above the level of liquid in the kettle body so as to ensure discharging when toppled.

However, the steam outlet of such a liquid heating container is connected to the inlet end 311 of the inlet pipe 31 while the entire exhaust line 3 will discharge air via the outlet end 341 of its exhaust pipe 34. The flow path of steam is along the direction of extension of the exhaust line and is relatively long. Condensed water that forms by steam condensing inside the exhaust line 3 is thus inevitable. During long-term use, condensed water accumulates in the exhaust line, which easily causes drinking water hygiene issues.

### Summary of the Invention

Therefore, an objective of the present application is to provide a liquid heating container wherein steam has a relatively short flow path in a venting passage of the pressure releasing passage control assembly and does not easily condense in the venting passage to form condensed water, so as to solve drinking water hygiene issues caused by steam condensing inside an excessively long passage.

According to a first aspect of the present application, a liquid heating container is provided, comprising a container body, a lid assembly, and a pressure releasing passage control assembly. The container body is provided on its top with an opening; the lid assembly covers the opening and is provided inside with a steam pressure releasing chamber used for steam pressure release; the pressure releasing passage control assembly is arranged inside the steam pressure releasing chamber and comprises a passage shell inside which two venting passages are formed and mobile sealing members arranged respectively inside each venting passage, each venting passage comprising a steam inlet arranged at a bottom wall of the venting passage and putting the venting passage in communication with an inner chamber of the container body, and a steam outlet arranged at a top wall of the venting passage and putting the venting passage in communication with the steam pressure releasing chamber, the steam outlet and the steam inlet being in communication with each other and located at a same end in a direction of extension of the venting passage and relatively close to each other. When the liquid heating container is in a toppled-over state, the mobile sealing member in the venting passage located in a lower position is capable of closing the venting passage located in a lower position, while the mobile sealing member in the venting passage located in a higher position is capable of opening the venting passage located in a higher position.

By means of the liquid heating container according to the present application, wherein the pressure releasing passage control assembly comprises a passage shell inside which two venting passages are formed and mobile sealing members arranged respectively inside each venting passage, each venting passage comprising a steam inlet arranged at a bottom wall of the venting passage and putting the venting passage in communication with an inner chamber of the container body, and a steam outlet arranged at a top wall of the venting passage and putting the venting passage in communication with the steam pressure releasing chamber, the steam outlet and the steam inlet being in communication with each other and located at the same end in the direction of extension of the venting passage and relatively close to each other, when in use, steam in the inner chamber of the container body can enter the venting passages via the steam inlets and be discharged rapidly via the steam outlets, has a relatively short flow path in the pressure releasing passage control assembly, and can be rapidly discharged out of the pressure releasing passage control assembly, thus making it difficult for steam to form condensed water in the venting passages and thus solving drinking water hygiene issues caused by condensed water easily formed by steam in an existing passage which is too long.

Specifically, the liquid heating container further comprises a water pouring opening and a handle part arranged opposite to each other, first ends of the two venting passages extend towards the handle part and are connected to each other, second ends of the two venting passages extend respectively towards different directions and away from each other, the two venting passages are arranged symmetrically relative to a line connecting the water pouring opening and the handle part, and the steam outlets and the steam inlets are arranged in pairs and located at the second ends of the respective venting passages.

In those embodiments, thanks to the fact that the two venting passages are arranged symmetrically relative to the line connecting the water pouring opening and the handle part, each venting passage can cover as much as possible the two ends of the steam pressure releasing chamber along the connecting line, so as to provide a position advantage to the movement of its respective mobile sealing member. In this way, regardless of the direction of toppling, under the effect of gravity, the mobile sealing member in the venting passage located in a lower position comes to a position in which it blocks the venting passage, while the mobile sealing member in the venting passage located in a higher position comes to a position in which it opens the venting passage, thus meeting the needs of the liquid heating container in an anti-toppling state.

In some embodiments, each venting passage further comprises a partition wall extending in a length direction of the venting passage and dividing the venting passage in its width direction into a first passage groove and a second passage groove that are parallel and in communication with each other, the steam inlet being arranged at a bottom wall of the second passage groove, the steam outlet being located at a top wall of the first passage groove.

In those embodiments, thanks to the fact that the partition wall divides the venting passage in the length direction into a first passage groove and a second passage groove in communication and connected to each other, that the steam outlet and the steam inlet are arranged respectively at their corresponding locations, and that the steam outlet and the steam inlet are arranged in an offset manner in different grooves, it provides an advantage for arranging the position of the mobile sealing members.

In some embodiments, the mobile sealing members are balls arranged in the first passage grooves and capable of rolling between the first ends and second ends of the first passage grooves. When the balls roll to the second ends of the first passage grooves, they can block the steam outlets. When the balls roll to the first ends of the first passage grooves, the steam outlets and the steam inlets are in communication.

In those embodiments, balls are used as the mobile sealing members, which have a simple structure and are easy to realize and manufacture. By arranging the balls in the first passage grooves, compared with a solution where the balls are arranged in the second passage grooves, as the balls are located below the steam outlets, when steam is being discharged out, steam can push the balls to block the steam outlets from below, so shat the effect of blocking the venting passages is better.

In some embodiments, in a height direction of the liquid heating container, bottom walls at the first ends of the first passage grooves have a height smaller than that of bottom walls at the second ends of the first passage grooves, and the partition walls have a height smaller than that of the first passage grooves; the first ends of the two venting passages are connected and in communication with each other.

Specifically, the first ends of the first passage grooves are provided with an opening, the first passage grooves in the two venting passages are connected to each other via the openings, and stoppers are provided at the locations of communication.

In those embodiments, due to the fact that it is further provided that, in the height direction of the liquid heating container, the height of bottom walls at the first ends of the first passage grooves is lower than the height of bottom walls at the second ends of the first passage grooves, when the container is in normal use, as there is a difference in height between the first ends and the second ends, the balls will be located at the first ends of the first passage grooves under the effect of its own weight, so that steam in the inner chamber of the container body can pass through the venting passages via the steam inlets and be discharged into the steam pressure releasing chamber of the lid assembly via the steam outlets, achieving normal venting and pressure releasing functions. By providing that the first passage grooves in the two venting passages are in communication with each other, when the container is in a toppled-over state, condensed water or spilled water in the venting passage located in a higher position will, under the effect of gravity, flow to the first passage groove of the venting passage located in a lower position, to the corresponding second passage groove via the partition wall, and back into the inner chamber of the container body via the steam inlet, which prevents drinking water hygiene issues caused by steam remaining for a long time in the venting passage. In addition, it also reduces the overall quantity of spilled water of the pressure releasing passage control assembly, and meets the requirements of water spilling performance tests. By providing the stoppers, the position of the mobile sealing members can be limited, preventing the blocking function from being ineffective.

In some embodiments, the passage shell comprises an upper plate and a lower plate. The steam outlets are arranged through the upper plate; the lower plate is arranged below the upper plate and encloses with the upper plate to form the passage shell, the steam inlets are arranged through the lower plate, and the two venting passages are connected to each other to form an L shape.

In those embodiments, by providing that the upper plate and the lower plate are combined and enclosed together to form the passage shell therebetween, the structure is simple, and the passage shell with a specific form can be formed by the upper plate and the lower plate enclosed together. Compared with a tubular passage, customized design can be made according to the size of the steam pressure releasing chamber so as to fully make use of the inner space of the steam pressure releasing chamber and form a liquid heating container with an appropriate size. In addition, under the effect of the difference in pressure between the interior and exterior of the kettle body, steam will scatter in a direction from bottom to top. By arranging the steam outlets through the upper plate and the steam inlets 421 through the lower plate 42, and by providing that the steam outlets and the steam inlets are in communication with each other and relatively close to each other, the steam outlets and the steam inlets are arranged in a direction that facilitates steam discharge, which better facilitates the successful discharging of steam and thus prevents the formation of condensed water due to the excessive length passed through inside a venting passage.

In some embodiments, the partition walls are formed at an upper surface of the lower plate, and upper ends of the partition walls are at a preset distance from a lower surface of the upper plate, and/or the partition walls are formed at a lower surface of the upper plate and lower ends of the partition walls are at a preset distance from an upper surface of the lower plate; wherein the first passage grooves have an opening at the first ends of the venting passages, and the diameter of the balls is larger than or equal to the preset distance, and larger than the width of the openings of the first passage grooves.

In those embodiments, by providing that upper end of the partition walls are at a preset distance from a lower surface of the upper plate, or that lower ends of the partition walls are at a preset distance from an upper surface of the lower plate, steam can pass through the first passage grooves and the second passage grooves in the venting passages. By providing that the diameter of the balls is larger than or equal to the preset distance and larger than the width of the openings of the first passage grooves, the balls will not disengage from the first ends of the first passage grooves and render the blocking function ineffective, and will not move from the first passage grooves to the second passage grooves and weaken the blocking function.

In some embodiments, the partition walls are provided with through holes that put the first passage grooves and the second passage grooves in communication, the through holes are arranged to be close to the steam inlets, and the diameter of the balls is larger than the diameter of the through holes and larger than the width of the openings of the first passage grooves.

In those embodiments, by providing the partition walls with through holes, steam can pass through the first passage grooves and the second passage grooves in the venting passages. By providing that the diameter of the balls is larger than the diameter of the through holes and larger than the width of the opening of the first passage grooves, the balls will not disengage from the first ends of the first passage grooves and render the blocking function ineffective, and will not move from the first passage grooves to the second passage grooves and weaken the blocking function.

In some embodiments, the lid assembly comprises a top lid and a bottom lid that enclose the steam pressure releasing chamber, a bottom wall of the bottom lid being provided with a steam communicating opening that puts the inner chamber of the container body and the steam pressure releasing chamber in communication, the steam communicating opening being connected to the steam inlets.

In those embodiments, by providing the bottom wall of the bottom lid of the lid assembly with a steam communicating opening that puts the inner chamber of the container body and the steam pressure releasing chamber in communication, the realization of the connection with the steam inlets at the bottom wall of the pressure releasing passage control assembly is facilitated.

In some embodiments, a bottom wall of the lid assembly further comprises a venting column that puts the inner chamber of the container body and the steam pressure releasing chamber in communication, and the lower plate is provided with a venting column connecting opening located at a position close to the handle part, the venting column passing through the venting column connecting opening and extending towards the venting passages, the liquid heating container further comprising a pressure releasing valve movably mounted on the upper plate at a location corresponding to the position of the venting column.

In those embodiments, by movably mounting a pressure releasing valve on the upper plate at a location corresponding to the position of the venting column, when the balls do not block the venting passages, as the air pressure inside the container body can be normally discharged, the pressure releasing valve blocks the upper end of an auxiliary venting opening to prevent liquid from spilling out from there. When both venting passages are blocked, as the air pressure inside the container body is not timely discharged and continues to increase consequently, the pressure releasing valve moves away from the upper end of the auxiliary venting opening under the effect of the air pressure to ensure normal venting, and then, under the effect of the balance between the interior and exterior air pressures, blocks again the upper end of the auxiliary venting opening under the effect of its own weight.

In some embodiments, the lid assembly is further provided with a steam discharging opening, and the liquid heating container further comprises a steam discharging passage arranged inside the handle part, the steam discharging opening putting the steam pressure releasing chamber and an upper end of the steam discharging passage in communication, a lower end of the steam discharging passage extending to the bottom of the liquid heating container.

In those embodiments, by further providing the lid assembly with a steam discharging opening, steam entering the steam pressure releasing chamber can enter the bottom of the liquid heating container via the steam discharging opening and the steam discharging passage and then be discharged out of the liquid heating container, and the risk of scalding a user during use can be reduced as the entire flow path of steam does not easily come into direct contact with the user.

In the liquid heating container according to the present application, due to the fact that steam in the inner chamber of the container body can enter the venting passages via the steam inlets and be discharged rapidly via the steam outlets, steam has a relatively short flow path in the pressure releasing passage control assembly and can be rapidly discharged out of it, so that steam does not easily form condensed water in the venting passages, thus solving drinking water hygiene issues in existing excessively long passages caused by condensed water easily formed therein by steam.

### Description of the Drawings

The above-described and other objectives and features of the present invention will become more apparent from the description of embodiments made below in connection with the accompanying drawings, in which:

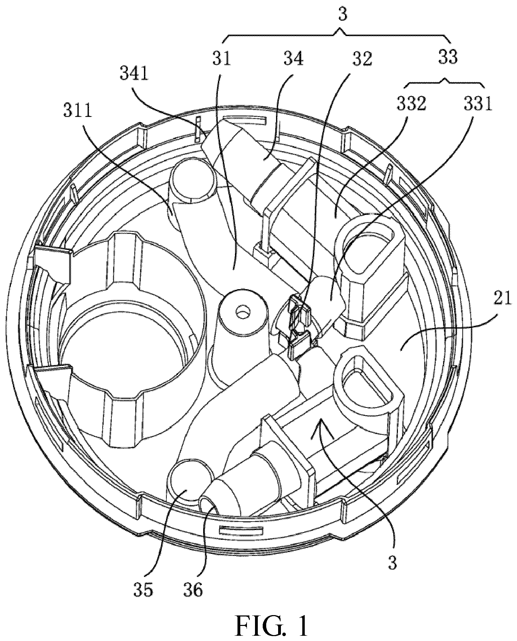

Fig. 1 is a schematic structural view of an exhaust line in the prior art;
Fig. 2 is a schematic structural view of a liquid heating container provided according to an embodiment of the present invention;
Fig. 3 is a schematic structural view of a lid assembly, placed upside down, provided according to an embodiment of the present invention;
Fig. 4 is a schematic structural view of a lid assembly provided according to an embodiment of the present invention, with the top lid removed;
Fig. 5 is a schematic structural view of a liquid heating container provided according to an embodiment of the present invention when it is a toppled-over state;
Fig. 6 is a schematic structural view of the liquid heating container shown in Fig. 5 with the upper plate removed;
Fig. 7 is a schematic structural view of a liquid heating container, in a state of pouring water, provided according to an embodiment of the present invention;
Fig. 8 is schematic structural view of a pressure releasing passage control assembly provided according to an embodiment of the present invention;
Fig. 9 is a sectional view taken along A-A in Fig. 8;
Fig. 10 is a schematic structural view of a lower plate provided according to an embodiment of the present invention when viewed from below;
Fig. 11 is a schematic structural view of a lower plate provided according to an embodiment of the present invention when viewed from above; and
Fig. 12 is a partially exploded schematic structural view of a liquid heating container provided according to an embodiment of the present invention.

Description of references in the accompanying drawings:
10 container body; 11 water pouring opening;
20 lid assembly; 21 bottom lid; 211 steam communicating opening; 212 venting column; 22 top lid; 221 steam discharging opening;
40 passage shell; 41 upper plate; 411 steam outlet; 42 lower plate; 421 steam inlet; 422 venting column connecting opening; 423 venting passage; 4231 first passage groove; 4232 second passage groove; 424 partition wall;
50 handle part;
60 mobile sealing member; 70 pressure releasing valve; 71 pressure releasing valve connecting opening; 80 base.

### Detailed Description of the Embodiments

It should be noted that terms indicating a position or a direction such as "upper" and "lower" described in the embodiments of the present application make the description from the angles shown in the accompanying drawings, and should not be construed as limitations to the embodiments of the present application. Furthermore, in the context, it should also be noted that when one element is referred to as being connected to another element, it can be either directly connected or indirectly connected thereto, unless it is expressly stated that one element is directly connected to the other element.

The terms like "first" and "second" are used for descriptive purposes only, and should not be understood as indicating or implying relative importance or implying the number of technical features indicated. Thus, a feature defined as "first" or "second" may expressly or implicitly include one or more of that feature. In the description of the present disclosure, unless stated otherwise, "a plurality of/multiple" means two or more.

Specific embodiments of the present application are described in detail.Though some embodiments have been shown and described, those skilled in the art should understand that they can be modified and improved without departing from the principles and spirit of the present application, the scope of which is defined by the claims and equivalents thereof.

The liquid heating container according to the present application will be described in detail below in reference to the accompanying drawings.

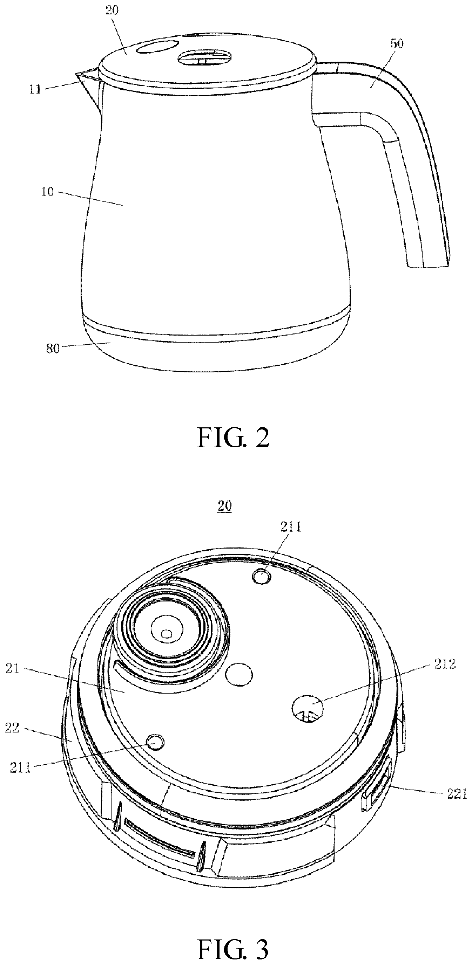

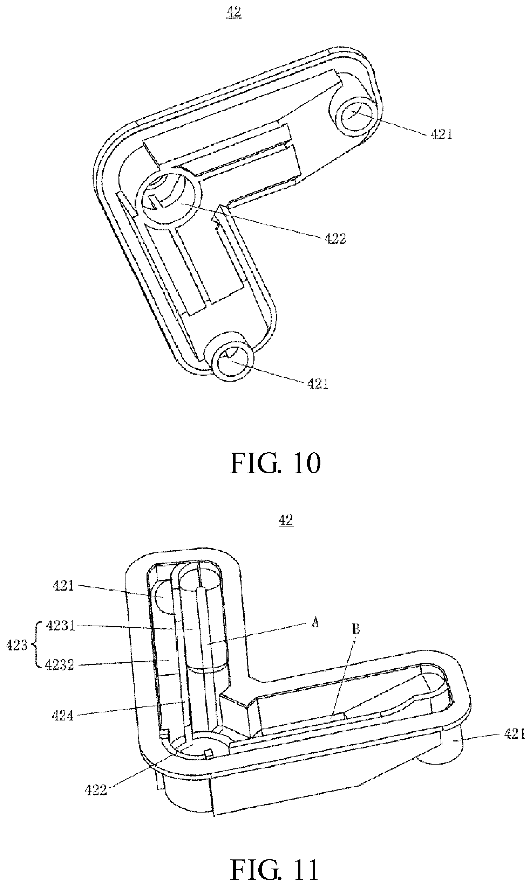

The present application provides a liquid heating container. As shown in Figs. 2 to 6 and Figs. 8 to 11, the liquid heating container comprises a container body 10, a lid assembly 20, and a pressure releasing passage control assembly. The container body 10 is provided on its top with an opening, and the lid assembly 20 covers the opening and is provided inside with a steam pressure releasing chamber used for steam pressure release. The pressure releasing passage control assembly is arranged inside the steam pressure releasing chamber and comprises a passage shell 40 inside which two venting passages 423 are formed and mobile sealing members 60 arranged respectively inside each venting passage 423. Each venting passage 423 comprises a steam inlet 421 arranged at a bottom wall of the venting passage 423 and putting the venting passage 423 in communication with an inner chamber of the container body 10, and a steam outlet 411 arranged at a top wall of the venting passage 423 and putting the venting passage 423 in communication with the steam pressure releasing chamber, the steam outlet 411 and the steam inlet 421 being in communication with each other and located at the same end in the direction of extension of the venting passage 423 and relatively close to each other. When the liquid heating container is in a toppled-over state, the mobile sealing member 60 in the venting passage 423 located in a lower position is capable of closing the venting passage 423 located in a lower position, while the mobile sealing member 60 in the venting passage 423 located in a higher position is capable of opening the venting passage 423 located in a higher position.

In the liquid heating container according to the present application, the passage shell is provided inside with two venting passages, each venting passage 423 comprising a steam inlet 421 arranged at a bottom wall of the venting passage 423 and putting the venting passage 423 in communication with an inner chamber of the container body 10, and a steam outlet 411 arranged at a top wall of the venting passage 423 and putting the venting passage 423 in communication with the steam pressure releasing chamber, the steam outlet 411 and the steam inlet 421 being in communication with each other and located at the same end in the direction of extension of the venting passage 423 and relatively close to each other. When the container is in use, steam in the inner chamber of the container body 10 can enter a venting passage via a steam inlet 421 and be discharged rapidly via a steam outlet 411, has a relatively short flow path in the pressure releasing passage control assembly and can be rapidly discharged out of it, thus making it difficult for steam to form condensed water in a venting passage and thus solving drinking water hygiene issues due to the fact that steam easily forms condensed water in an existing passage which is too long.

In the liquid heating container according to the present application, during normal use, the venting passages in the pressure releasing passage control assembly can perform normal venting and pressure release. When the container topples over, the venting passage located below the level of liquid in the container body 10 needs to be closed to prevent water from spilling so as to meet requirements for water spilling amount tests, and the venting passage located above the level of liquid in the container body 10 needs to be open so as to release pressure in the container body 10 and prevent dangerous situations such as explosions due to an excessive air pressure.

In some embodiments, the liquid heating container further comprises a water pouring opening 11 and a handle part 50 arranged opposite to each other, first ends of the two venting passages 423 extend respectively towards the handle part 50 and are connected to each other, second ends of the two venting passages 423 extend respectively towards different directions and away from each other, the two venting passages 423 are arranged symmetrically relative to a line connecting the water pouring opening 11 and the handle part 50, and the steam outlets 411 and the steam inlets 421 are arranged in pairs and are located at the second ends of the respective venting passages 423.

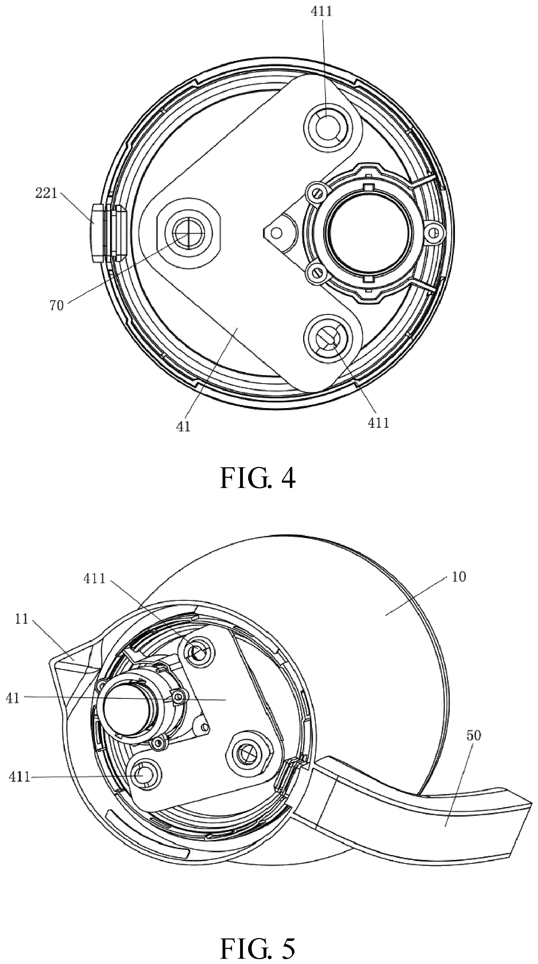

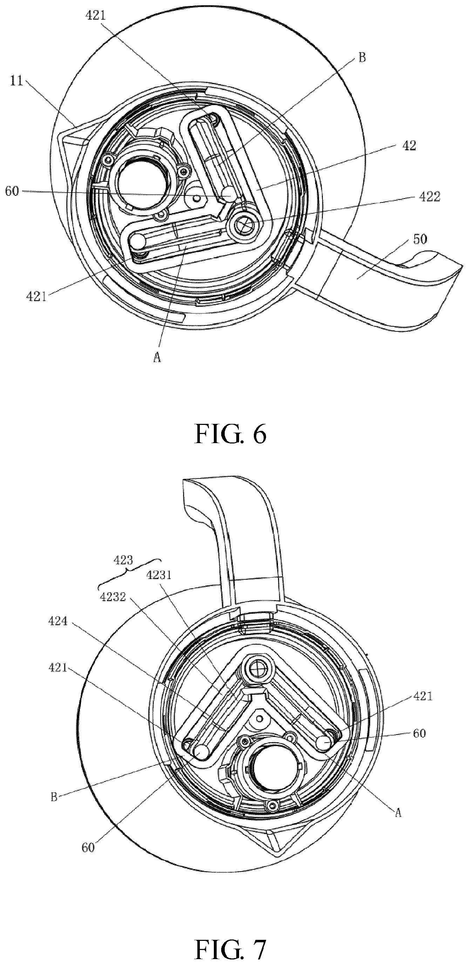

Figs. 5 and 6 show respectively examples in which the liquid heating container is in a toppled-over state. As shown in Figs. 5 and 6, the liquid heating container further comprises a water pouring opening 11 and a handle part 50, and the venting passages comprise a first venting passage A and a second venting passage B, a first end of the first venting passage A and a first end of the second venting passage B being connected to each other, a second end of the first venting passage A and a second end of the second venting passage B extending respectively in different directions. The first venting passage A and the second venting passage B are arranged symmetrically relative to the line connecting the water pouring opening 11 and the handle part 50. The junction between the first end of the first venting passage A and the first end of the second venting passage B is oriented towards the handle part 50. The steam outlets 411 and the steam inlets 421 are arranged in pairs and located at the second end of the first venting passage A and the second end of the second venting passage B.

In those embodiments, by arranging the first venting passage A and the second venting passage B symmetrically relative to the line connecting the water pouring opening 11 and the handle part 50, each venting passage can cover as much as possible the two ends of the steam pressure releasing chamber along the connecting line, so as to provide a position advantage to the movement of its respective mobile sealing member 60. In this way, regardless of the direction of toppling, under the effect of gravity, the mobile sealing member 60 in the venting passage located in a lower position comes to a position in which it blocks the venting passage, while the mobile sealing member 60 in the venting passage located in a higher position comes to a position in which it opens the venting passage, thus meeting the needs of the liquid heating container in an anti-toppling state.

According to the present application, the venting passages 423 serve, on one hand, as guiding chambers for the mobile sealing members 60, and on the other hand, as temporary transition areas for steam to enter the passage shell via the steam inlets 421. The present application can provide that the steam outlets 411 and the steam inlets 421 correspond to each other in position, that the mobile sealing members 60 are sized in such a way that they cannot disengage from any one of the steam outlets 411 and steam inlets 421 and can block any one of the steam outlets 411 and steam inlets 421.

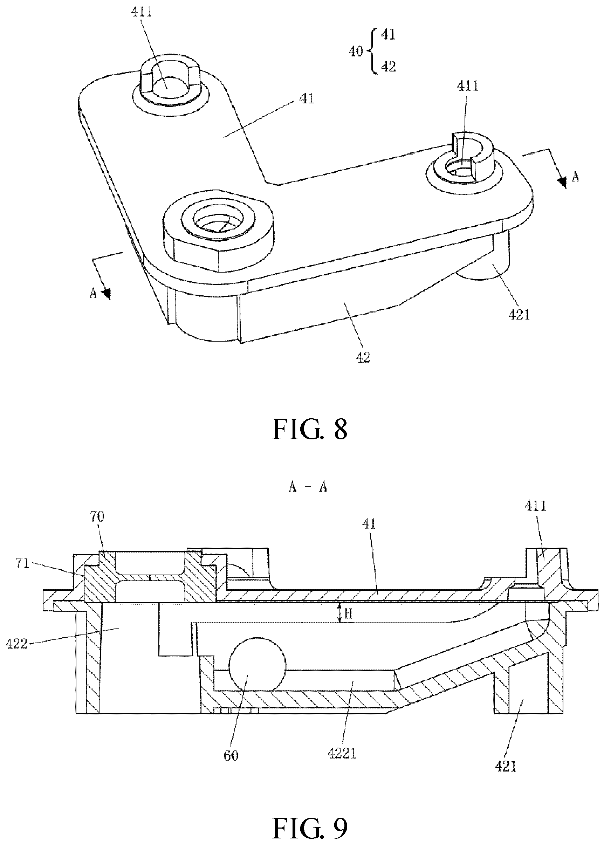

In a preferred embodiment, as shown in Figs. 8 to 11, each venting passage 423 further comprises a partition wall 424. The partition walls 424 extend in the length direction of the venting passages 423 and divide the venting passages 423 in the length direction into a first passage groove 4231 and a second passage groove 4232 that are parallel in the width direction and in communication with each other, the steam inlets 421 being arranged at bottom walls of the second passage grooves 4232, the steam outlets 411 being located at top walls of the first passage grooves 4231.

In those embodiments, since the partition walls 424 divide the venting passages 423 in the length direction into a first passage groove 4231 and a second passage groove 4232 in communication with each other and the steam outlets 411 and the steam inlets 421 are arranged respectively at their corresponding locations and arranged in an offset manner in different grooves, an advantage is provided for arranging the positions of the mobile sealing members 60 (described below in detail).

According to the present application, the mobile sealing members 60 are balls arranged in at least one of the first passage grooves 4231 and the second passage grooves 4232. If the balls are arranged in the second passage grooves 4232, in the event that the balls block the steam inlets 421, as the balls are located above the steam inlets 421, if the air pressure in the inner chamber of the container body 10 is too high, balls may move back and forth when pushed by the air pressure, affecting the sealing effect of the balls. Therefore, in a preferred embodiment of the present application, the steam outlets 411 are arranged above the first passage grooves 4231. If balls are arranged in the first passage grooves 4231, the first passage grooves 4231 serve as guiding chambers for the balls, which can roll between the first ends and second ends of the first passage grooves 4231. When the balls roll to the second ends of the first passage grooves 4231, they can block the steam outlets 411. When the balls roll to the first ends of the first passage grooves 4231, the steam outlets 411 and the steam inlets 421 are in communication, and steam is thus not blocked by balls in the flow path and can flow smoothly. In addition, compared with a solution in which balls are arranged in the second passage grooves 4232, when balls are arranged in the first passage grooves 4231, as the balls are located below the steam outlets 411, they can be pushed to block the steam outlets 411 from below by steam during its discharge to the exterior, improving the effect of blocking the venting passages.

As shown in Fig. 9, in the height direction of the liquid heating container, the height of bottom walls at the first ends of the first passage grooves 4231 is smaller than the height of bottom walls at the second ends of the first passage grooves 4231, the height of the partition walls 424 is smaller than the height of the first passage grooves 4231, and the first ends of the two venting passages 423 are connected and in communication with each other. Specifically, the first ends of the first passage grooves 4231 are provided with an opening, the first passage grooves 4231 in the two venting passages 423 are in communication with each other via the openings, and stoppers are provided at the locations of communication.

In those embodiments, it is further provided that, in the height direction of the liquid heating container, the height of a bottom wall of the first ends of the first passage grooves 4231 is smaller than the height of a bottom wall of the second ends of the first passage grooves 4231. In normal use, as there is a difference in height between the first ends and the second ends, the balls will be located at the first ends of the first passage grooves 4231 under the effect of its own gravity, so that steam in the inner chamber of the container body can pass through the venting passages 423 via the steam inlets 421 and be discharged into the steam pressure releasing chamber of the lid assembly 20 via the steam outlets 411, achieving normal venting and pressure releasing functions. By making the first passage grooves 4231 of the two venting passages be in communication with each other, when the container is in a toppled-over state, the condensed water or overflowing water in the venting passage located in a higher position will flow, under the effect of gravity, to the first passage groove 4231 of the venting passage located in a lower position and to the corresponding second passage groove 4232 via the partition wall 424 and then back to the inner chamber of the container body 10 via the steam inlet 421. This prevents drinking water hygiene problems caused by steam remaining in the venting passages for a long time. In addition, it also reduces the overall amount of overflow water of the pressure releasing passage control assembly, which meets the requirements of the overflow performance test. By providing the stoppers, the balls can be limited in position so as to avoid the failure of the blocking function.

In some embodiments, the passage shell 40 comprises an upper plate 41 and a lower plate 42. The steam outlets 411 are arranged through the upper plate 41. The lower plate 42 is arranged below and connected to the upper plate 41 and encloses with the upper plate 41 to form the passage shell 40, and the steam inlets 421 are arranged through the lower plate 42.

In those embodiments, by providing an upper plate 41 and a lower plate 42 combined and enclosed together to form the passage shell 40, the structure is simple, and the passage shell 40 with a specific form can be formed by the upper plate 41 and the lower plate 42 enclosed together. With the passage shell 40 of the present application, compared with a tubular passage, customized design can be made according to the size of the steam pressure releasing chamber so as to fully make use of the inner space of the steam pressure releasing chamber and form a liquid heating container with an appropriate size. In addition, under the effect of the difference in pressure between the interior and exterior of the kettle body, steam will scatter in a direction from bottom to top. By arranging the steam outlets 411 through the upper plate 41 and the steam inlets 421 through the lower plate 42, and by providing that the steam outlets 411 and the steam inlets 421 are in communication with each other and relatively close to each other, the steam outlets 411 and the steam inlets 421 are arranged in a direction that facilitates steam discharge, which better facilitates the successful discharging of steam and thus prevents the formation of condensed water due to the excessive length passed through inside a venting passage.

According to the present application, the upper plate 41 and the lower plate 42 engage with each other. For example, without limitation, the upper plate 41 covers the lower plate 42 in a snap-fit matter. After the upper plate 41 is connected to the lower plate 42, in order for the first passage grooves 4231 and the second passage grooves 4232 to still be in communication and connected, through holes can be provided in the partition walls 424 so that air can pass between the first passage grooves 4231 and the second passage grooves 4232, ensuring air flow in the venting passages. The form of the through holes can be configured in any way so long as it enables air to normally pass through and prevents the balls from moving out of position into the second passage grooves 4232. It can also be provided that the partition walls 424 are not in contact with the lower surface of the upper plate 41 or with the lower wall of the lower plate 42. How the first passage grooves 4231 and the second passage grooves 4232 are in communication and connected is not limited by the present application. A person skilled in the art can, based on the teachings of the present application, choose another appropriate way of communication, for example, but without limitation, configuring the partition walls to be of a mesh structure.

In some embodiments, the partition walls 424 are formed at an upper surface of the lower plate 42, and an upper end of the partition walls 424 is at a preset distance from a lower surface of the upper plate 41, and/or the partition walls 424 are formed at a lower surface of the upper plate 41 and a lower end of the partition walls 424 is at a preset distance from an upper surface of the lower plate 42, wherein the first passage grooves 4231 have an opening at the first ends of the venting passages 423, and the diameter of the balls is larger than or equal to the preset distance, and larger than the width of the openings of the first passage grooves 4231.

In those embodiments, by providing that an upper end of the partition walls 424 is at a preset distance from a lower surface of the upper plate 41,and/or a lower end of the partition walls 424 is at a preset distance from an upper surface of the lower plate 42, steam can pass through the first passage grooves 4231 and the second passage grooves 4232. By providing that the diameter of the balls is larger than or equal to the preset distance and larger than the width of the openings in the first ends of the first passage grooves 4231, the balls will not disengage from the first passage grooves 4231 and render the blocking function ineffective, and will not move from the first passage grooves 4231 to the second passage grooves 4232 and weaken the blocking function.

In some other embodiments, the partition walls 424 are provided with through holes that put the first passage grooves 4231 and the second passage grooves 4232 in communication, the through holes are arranged to be close to the steam inlets 421, and the diameter of the balls is larger than the diameter of the through holes and larger than the width of the openings of the first passage grooves 4231.

In those embodiments, by providing the partition walls 424 with through holes, steam can pass through the first passage grooves 4231 and the second passage grooves 4232. By providing that the diameter of the balls is larger than the diameter of the through holes and larger than the width of the opening in the first ends of the first passage grooves 4231, the balls will not disengage from the first ends of the first passage grooves 4231 and render the blocking function ineffective, and will not move from the first passage grooves 4231 to the second passage grooves 4232 and weaken the blocking function.

In some other embodiments, to further improve air flow in the venting passages, the above two embodiments can be combined. Specifically, it is provided that an upper end of the partition walls 424 is at a preset distance from a lower surface of the upper plate 41, and/or a lower end of the partition walls 424 is at a preset distance from an upper surface of the lower plate 42, and the partition walls 424 are provided with through holes.

In addition, when testing the performance of an anti-toppling liquid heating container, the amount of spilled water when the anti-titling liquid heating container is in a toppled-over state will affect the results of the performance testing. According to the present application, steam inlets 421 are arranged at a bottom wall of the corresponding lower plate 42 of the second passage grooves 4232, steam outlets 411 are located above the first passage grooves 4231, the mobile sealing members 60 are arranged in at least one of the first passage grooves 4231 and the second passage grooves 4232, thus steam entering via the steam inlets 421 can be discharged into the steam pressure releasing chamber via the steam outlets 411 by bypassing the partition walls 424. Compared with the technical solution in the prior art in which the balls are arranged in exhaust lines that are connected end to end, on one hand, the balls will not prevent the admission of air via the steam inlets 421 when they do not block the steam outlets 411, ensuring smooth admission of air of the venting passages, and on the other hand, by providing separately a guiding chamber for the balls, when blocking is needed, the balls can rapidly move to the location of the steam outlets 411 in response without interference from other parts which would otherwise impact their response speed, thus preventing liquid in the inner chamber of the container body 10 from being discharged first out of the steam outlets 411, which would otherwise lead to failure in the spilled water amount test.

In some embodiments, the lid assembly 20 comprises a top lid 22 and a bottom lid 21 that enclose to form the steam pressure releasing chamber, a bottom wall of the bottom lid 21 being provided with steam communicating openings 211 that put the inner chamber of the container body 10 and the steam pressure releasing chamber in communication, the steam communicating openings 211 being connected to the steam inlets 421. The steam communicating opening 211 can be formed as a through hole in the bottom wall of the lid assembly 20. In this case, the steam communicating openings 211 and the steam inlets 421 need to be connected by means of connecting tubes additionally provided. The steam communicating opening 211 can also be a hollow connecting column, one end of which passes through the bottom wall of the lid assembly and the other end of which protrudes upwards relative to the bottom surface of the lid assembly and extends towards the steam pressure releasing chamber.

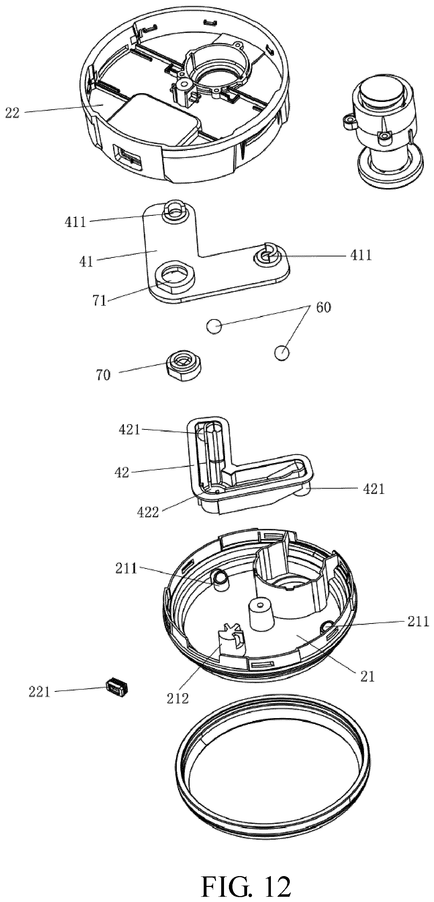

Fig. 3 shows an example of the structure of the lid assembly 20 in an embodiment of the present application. Fig. 12 shows a partially exploded schematic structural view of the lid assembly of an embodiment of the present application. As shown in Figs. 3 and 12, the lid assembly 20 comprises a top lid 22 and a bottom lid 21 that engage with each other, the steam communicating opening 211 being a hollow connecting column that is formed at the bottom lid 21.

In those embodiments, by providing the bottom wall of the lid assembly 20 with a steam communicating opening 211 that puts the inner chamber of the container body 10 and the steam pressure releasing chamber in communication, the connection with the steam inlets 421 at the bottom wall of the pressure releasing passage control assembly is facilitated.

In a liquid heating container according to the present application, as shown in Fig. 7, when water is being poured out, the balls will block the corresponding steam outlets 411 under the effect of gravity so that each venting passage of the pressure releasing passage control assembly is in a blocked state. In order to ensure safety when water is being poured out, an outlet that allows steam to be normally discharged needs to be provided additionally.

In some embodiments, as shown in Figs. 6, 10, and 12, the bottom wall of the lid assembly 20 further comprises a venting column 212 that puts the inner chamber of the container body 10 and the steam pressure releasing chamber in communication, and the lower plate 42 is provided with a venting column connecting opening 422 located at a position close to the handle part 50, the venting column 212 passing through the venting column connecting opening 422 and extending towards the venting passages. The liquid heating container further comprises a pressure releasing valve 70 movably mounted on the upper plate 41 at a location corresponding to the position of the venting column 212. Specifically, in the example shown in Figs. 9 and 12, the upper plate 41 is provided with a pressure releasing valve connecting opening 71, and the pressure releasing valve 70 is an elastic rubber ring that is elastically compressed into the pressure releasing valve connecting opening 71 and capable of moving in the height direction of the container under the effect of an external force.

In those embodiments, by movably mounting a pressure releasing valve 70 on the upper plate 41 at a location corresponding to the position of the venting column 212, when the balls do not block the venting passages, as the air pressure inside the container body 10 can be normally released, the pressure releasing valve 70 blocks the upper end of the venting column 212 to prevent liquid from spilling out from there. When both venting passages are blocked, as the air pressure inside the container body 10 is not timely released and continues to increase consequently, the pressure releasing valve moves away from the upper end of the venting column 212 under the effect of the air pressure to ensure normal venting, and then, under the effect of the balance between the interior and exterior air pressures, blocks again the upper end of the venting column 212 under the effect of its own weight.

In some embodiments, the lid assembly 20 is further provided with a steam discharging opening 221, and the liquid heating container further comprises a steam discharging passage (not illustrated in the drawings) arranged in the handle part 50, the steam discharging opening 221 being in communication with the steam pressure releasing chamber of the lid assembly 20 and an upper end of the steam discharging passage, a lower end of the steam discharging passage extending to the bottom of the liquid heating container. In a preferred embodiment, an upper end of the handle part 50 is connected to the steam discharging opening 221 in the lid assembly 20, and a lower end of the handle part 50 is connected to a base 80 at the bottom of the container body 10 of the liquid heating container. A lower end of the steam discharging passage extends into the base 80 of the liquid heating container (their connection relationship is not illustrated in the drawings).

In the liquid heating container according to the present application, by further providing the lid assembly 20 with a steam discharging opening 221, steam entering the steam pressure releasing chamber can enter the bottom of the liquid heating container via the steam discharging opening 221 and through the steam discharging passage before being discharged out of the liquid heating container, and the risk of scalding a user during use can be reduced as the entire flow path of steam does not easily come into direct contact with the user.

In the liquid heating container of the present application, due to structural reasons, when it topples over, as the weight of the handle part 50 causes imbalance of the center of gravity of the liquid heating container, it will topple over and roll with the handle part 50 oriented downwards and finally rests in a state with the handle part 50 as a supporting point. There are generally two toppled-over states: it can topple over towards the direction shown in Fig. 6, or towards the direction mirroring that shown in Fig. 6.

In normal use, the two mobile sealing members are respectively located at a first end of a first venting passage A and a first end of a second venting passage B. When in a toppled-over state, each mobile sealing member will roll to the lowest position of the venting passage where it is located.

Fig. 6 shows an example of a toppled-over state of a liquid heating container. In the example shown in Fig. 6, provided that the inner chamber of the container body 10 contains a normal quantity of liquid, when the liquid heating container topples over, the mobile sealing member 60 in the venting passage A located in a lower position rolls to a blocking position and blocks the steam outlet 411 of the venting passage A. At this moment, the steam inlet 421 of the venting passage A is generally below the level of liquid. As the mobile sealing member 60 is in a blocking position, at this moment, the venting passage A is in a sealed state, and liquid in the inner chamber of the container body 10 will not spill out via the venting passage A. At the same time, the mobile sealing member 60 in the venting passage B is not in a blocking position, thus the venting passage B is in a communicating state, and the steam inlet 421 of B is in the highest position and generally above the level of liquid in the inner chamber of the container body 10. When there is a steam pressure inside the liquid heating container, steam can enter the venting passage B via its steam inlet 421 and be discharged out of its steam outlet 411 so that pressure releasing and venting are performed timely. In addition, after air pressure inside the inner chamber of the container body 10 is released, liquid inside the inner chamber may enter the venting passage B via its steam inlet 421, enter the first passage groove 4231 via the second passage groove 4232 in the venting passage. As the two first passage grooves 4231 of A and B are in communication with each other, liquid may then enter the first passage groove 4231 in the venting passage A and flow back to the inner chamber of the container body 10 via the steam inlet 421 of A after flowing into the corresponding second passage groove 4232 via the partition wall 424. Therefore, with the pressure releasing passage control assembly according to the present application, when the venting passage B is in an open state, not only can air pressure inside the container body 10 be released, but also it can be ensured that liquid in the inner chamber of the container body 10 does not spill out.

In sum, in the liquid heating container according to the present application, steam in the inner chamber of the container body 10 can enter the venting passages via the steam inlets 421 and be discharged rapidly out of the steam outlets 411. Therefore, steam has a relatively short flow path in the pressure releasing passage control assembly and can be rapidly discharged out of it, so that steam does not easily form condensed water in the venting passages, thus solving drinking water hygiene issues in existing excessively long passages caused by condensed water easily formed therein by steam.

Although embodiments of the present application have been described above in detail, various modifications and variations can be made to the embodiments of the present application by those skilled in the art without departing from the spirit and scope of the present application. It should be understood that such modifications and variations will still fall within the spirit and scope of the embodiments of the present application as defined by the claims, as would appear to those skilled in the art.

## Claims

1. A liquid heating container **characterized in that** it comprises:
a container body (10) provided on its top with an opening;
a lid assembly (20) covering the opening and provided inside with a steam pressure releasing chamber used for steam pressure release;
a pressure releasing passage control assembly arranged inside the steam pressure releasing chamber and comprising a passage shell (40) inside which two venting passages (423) are formed and mobile sealing members (60) arranged respectively inside each venting passage (423), each venting passage (423) comprising a steam inlet (421) arranged at a bottom wall of the venting passage (423) and putting the venting passage (423) in communication with an inner chamber of the container body (10), and a steam outlet (411) arranged at a top wall of the venting passage (423) and putting the venting passage (423) in communication with the steam pressure releasing chamber, the steam outlet (411) and the steam inlet (421) being in communication with each other and located at a same end in a direction of extension of the venting passage (423) and relatively close to each other;
wherein when the liquid heating container is in a toppled-over state, the mobile sealing member (60) in the venting passage (423) located in a lower position is capable of closing the venting passage (423) located in a lower position, while the mobile sealing member (60) in the venting passage (423) located in a higher position is capable of opening the venting passage (423) located in a higher position.

2. The liquid heating container of claim 1, wherein the liquid heating container further comprises a water pouring opening (11) and a handle part (50) arranged opposite to each other, first ends of the two venting passages (423) extend towards the handle part (50) and are connected to each other, second ends of the two venting passages (423) extend respectively towards different directions and away from each other, the two venting passages (423) are arranged symmetrically relative to a line connecting the water pouring opening (11) and the handle part (50), and the steam outlets (411) and the steam inlets (421) are arranged in pairs and located at the second ends of the respective venting passages (423).

3. The liquid heating container of claim 2, wherein each venting passage (423) further comprises a partition wall (424) extending in a length direction of the venting passage (423) and dividing the venting passage (423) in its width direction into a first passage groove (4231) and a second passage groove (4232) that are parallel and in communication with each other, the steam inlet (421) being arranged at a bottom wall of the second passage groove (4232), the steam outlet (411) being located at a top wall of the first passage groove (4231).

4. The liquid heating container of claim 3, wherein the mobile sealing members (60) are balls arranged in the first passage grooves (4231) and capable of rolling between the first ends and second ends of the first passage grooves (4231), the balls being capable of blocking the steam outlets (411) when they roll to the second ends of the first passage grooves (4231), the steam outlets (411) and the steam inlets (421) being in communication when the balls roll to the first ends of the first passage grooves (4231).

5. The liquid heating container of claim 3 or 4, wherein in a height direction of the liquid heating container, bottom walls at the first ends of the first passage grooves (4231) have a height smaller than that of bottom walls at the second ends of the first passage grooves (4231), and the partition walls (424) have a height smaller than that of the first passage grooves (4231); and wherein the first ends of the two venting passages (423) are in communication with each other.

6. The liquid heating container of any one of preceding claims, wherein the passage shell (40) comprises:
an upper plate (41) through which the steam outlets (411) are arranged ;
a lower plate (42) arranged below the upper plate (41) and enclosing with the upper plate (41) to form the passage shell (40), the steam inlets (421) being arranged through the lower plate (42), the two venting passages (423) being connected to each other to form an L shape.

7. The liquid heating container of claim 6, wherein the partition walls (424) are formed at an upper surface of the lower plate (42) and upper ends of the partition walls (424) are at a preset distance from a lower surface of the upper plate (41), and/or the partition walls (424) are formed at a lower surface of the upper plate (41) and lower ends of the partition walls (424) are at a preset distance from a upper surface of the lower plate (42); and wherein the first passage grooves (4231) have an opening at the first ends of the venting passages (423), and the balls have a diameter larger than or equal to the preset distance, and larger than a width of the openings of the first passage grooves (4231); and/or
the partition walls (424) are provided with through holes that put the first passage grooves and the second passage grooves in communication, the through holes are arranged to be close to the steam inlets (421), and the balls have a diameter larger than that of the through holes and larger than the width of the openings of the first passage grooves (4231).

8. The liquid heating container of any one of preceding claims, wherein the lid assembly (20) comprises a top lid (22) and a bottom lid (21) that enclose the steam pressure releasing chamber, the bottom lid (21) being provided with a steam communicating opening (211) that puts the inner chamber of the container body (10) and the steam pressure releasing chamber in communication, the steam communicating opening (211) being connected to the steam inlets (421).

9. The liquid heating container of claim 6 or 7, wherein a bottom wall of the lid assembly (20) further comprises a venting column (212) that puts the inner chamber of the container body (10) and the steam pressure releasing chamber in communication, and the lower plate (42) is provided with a venting column connecting opening (422) located at a position close to the handle part (50), the venting column (212) passing through the venting column connecting opening (422) and extending towards the venting passages (423), the liquid heating container further comprising a pressure releasing valve (70) movably mounted on the upper plate (41) at a location corresponding to the position of the venting column (212).

10. The liquid heating container of any one of claims 2 to 5 , wherein the lid assembly (20) is further provided with a steam discharging opening (221), and the liquid heating container further comprises a steam discharging passage arranged inside the handle part (50), the steam discharging opening (221) putting the steam pressure releasing chamber and an upper end of the steam discharging passage in communication, a lower end of the steam discharging passage extending to the bottom of the liquid heating container.
